Europäisches Patentamt

European Patent Office

Office européen des brevets

(19)

(11) EP 1 391 948 A1

(12) EUROPEAN PATENT APPLICATION
published in accordance with Art. 158(3) EPC

(43) Date of publication:
25.02.2004 Bulletin 2004/09

(51) Int Cl.[7]: **H01M 4/02**, H01M 4/60,
H01M 4/62, H01M 4/66,
H01M 10/40

(21) Application number: 02771769.3

(22) Date of filing: 22.05.2002

(86) International application number:
PCT/JP2002/004925

(87) International publication number:
WO 2002/095848 (28.11.2002 Gazette 2002/48)

(84) Designated Contracting States:
AT BE CH CY DE DK ES FI FR GB GR IE IT LI LU
MC NL PT SE TR
Designated Extension States:
AL LT LV MK RO SI

(30) Priority: 22.05.2001 JP 2001152759

(71) Applicants:
• FUJI JUKOGYO KABUSHIKI KAISHA
Tokyo 160-0023 (JP)
• Shirouma Science Co., Ltd.
Shimoniikawa-gun, Toyama 939-0643 (JP)
• MITSUI & CO., LTD.
Chiyoda-ku Tokyo-to 100-0004 (JP)
• Yamaguchi, Shuichiro
Hiratsuka-shi, Kanagawa 254-0911 (JP)

(72) Inventors:
• YAMAGUCHI, Shuichiro
Hiratsuka-shi, Kanagawa 254-0911 (JP)
• HAMAZAKI, Ken-ichi
Mitaka-shi, Tokyo 181-0014 (JP)
• MASUDA, Souichiro
Hyogo 678-0023 (JP)
• SHIMOMURA, Takeshi
Isehara-shi, Kanagawa 259-1114 (JP)
• OYAMA, Noboru
Musashino-shi, Tokyo 180-0002 (JP)

(74) Representative: Jennings, Nigel Robin et al
KILBURN & STRODE
20 Red Lion Street
London WC1R 4PJ (GB)

(54) **ANODE FOR LITHIUM SECONDARY BATTERY AND LITHIUM SECONDARY BATTERY**

(57) A positive electrode for lithium secondary battery includes a collector obtained by forming a carbonaceous material film on the surface of a conductive substrate, and a positive electrode material layer carried on the carbonaceous material film side of the collector and containing an organic sulfide compound as a main active material.

F I G. 11

**Description**

Technical Field

The present invention relates to a positive electrode for lithium secondary battery and lithium secondary battery and, more particularly, to a lithium secondary battery suitable for a power supply of a portable electronic apparatus or electric vehicle requiring high energy density and to a positive electrode for use in the battery.

Background Art

In a conventional lithium secondary battery, a inorganic metal oxide such as lithium cobalt oxide ($LiCoO_2$) or lithium manganate ($LiMn_2O_4$) is used as the positive electrode, and a carbonaceous material is used as the negative electrode. The theoretical capacity of the positive electrode is 100 to 150 Ah/kg, whereas that of the negative electrode is 370 to 800 Ah/kg, i.e., three times that of the positive electrode or more.

Accordingly, it is an urgent necessity to develop a novel positive electrode material capable of achieving high energy density, in order to form a high-performance lithium secondary battery. Also, to improve the safety of a lithium secondary battery, the use of a sulfide compound, instead of the higher order oxide described above, as the positive electrode material has attracted attention.

Generally, a sulfur-based material is redox-reaction-active and has high energy density and high energy storage capability. That is, since the oxidation-number of a sulfur atom in the redox center can take a value from -2 to +6, high energy storage can be achieved by using a multi-electron transfer reaction. At room temperature, however, the electron transfer reaction is slow, so it is difficult to directly use a sulfur-based material as the positive electrode material.

As a recent example which has solved this problem, N. Oyama, et al., the present inventors, have reported a composite positive electrode material consisting of 2,5-dimercapto-1,3,4-thiadiazole and polyaniline in [N. Oyama, et al., Nature, vol. 373, 598-600 (1995)]. This composite positive electrode material exhibits high electron transfer rate at room temperature probably because polyaniline as a conductive polymer accelerates the redox reaction of an organic sulfur compound.

This organic sulfur compound has high energy density but makes it difficult to increase the electrical energy extractable per weight of a battery. This is principally because the low-conductivity a battery with organic sulfur compounds only works in the form of a thin film having a thickness of a few μm due to the poor conductivity, and because there was no effective collector material except for copper.

The positive electrode of a commercially available lithium secondary battery is manufactured by directly coating a collector made of an aluminum substrate with a slurry material containing any lithium composite oxides such as $LiCoO_2$, $LiNiO_2$, $LiMn_2O_4$, or $LiV_2O_5$, an electric conductivity enhancing agent such as acetylene black, a binder a shape-retaining agent or reinforcing agent such as PVDF, and a solvent such as NMP, and by molding the resultant structure with heat and pressure, thereby forming a positive electrode material layer.

On the other hand, good characteristics cannot be obtained by the above-mentioned method from a positive electrode containing an organic sulfide compound as an active material. This is so because sulfur of a thiol group in the positive electrode material layer causes chemical interaction with the aluminum substrate, and this raises the interface resistance between the positive electrode material layer and the aluminum substrate or raises the overvoltage with respect to redox reaction of the sulfur active point. This phenomenon similarly occurs when the collector is made of a metal substrate such as nickel or titanium.

It is, however, announced in N. Oyama et al., J. Electrochem. Soc., 144, L47 (1997) that the redox reaction of a sulfide compound is accelerated when copper is used as the collector. Unfortunately, a copper collector gradually dissolves during a charge/discharge process because a positive potential is applied to it, and this dissolution allows easy peeling of the positive electrode material layer from the collector.

Accordingly, to use an organic sulfide compound as the positive electrode active material of a lithium secondary battery, it is necessary to solve the problems caused by the collector material. More specifically, to extract high energy density as the characteristic feature of the organic sulfur compound described above, a conductive collector material several times lighter than copper must be found.

Aluminum is a candidate for this light material. A positive electrode collector should be desirably not corroded even at a high potential (e.g., 4 V vs. Li/Li$^+$) in the presence of an organic solvent forming the electrolyte.

To achieve this object, it is possible to use oxide-film-coated aluminum developed for a capacitor or H8079 steel aluminum. However, a sufficient electrical current cannot flow through these materials because they have a large interface resistance.

To allow the electrical current to flow easily, it is possible to activate the surface of the aluminum collector by removing the oxide film from the surface by an alkali or acid treatment. A large electrical current can be made to flow through the collector by these treatments,. but the collector cannot resist against corrosion when it is used for long time periods. Also, when the aluminum collector is used in a positive electrode containing the organic sulfur compound as an active material, inactivation of the collector significantly progresses to make it unusable.

Disclosure of Invention

It is an object of the present invention to provide a positive electrode for lithium secondary battery, which achieves high energy density, by making it possible to use a conductive material, such as aluminum, which is several times lighter than copper, as a collector which carries a positive electrode material layer containing an organic sulfide compound as an active material.

It is another object of the present invention to provide a high-capacity, high-performance lithium secondary battery having the positive electrode described above.

According to the present invention, there is provided a positive electrode for lithium secondary battery comprising

a collector obtained by forming a carbonaceous material film on the surface of a conductive substrate, and

a positive electrode material layer carried on the carbonaceous material film side of the collector and containing an organic sulfide compound as a main active material.

According to the present invention, there is provided a lithium secondary battery comprising.

a positive electrode having a collector formed by forming a carbonaceous material film on the surface of a conductive substrate, and a positive electrode material layer carried on the carbonaceous material film side of the collector and containing an organic sulfide compound as a main active material,

an electrolyte, and

a negative electrode having a material which storages and releases lithium.

Brief Description of Drawings

FIG. 1 is an SEM photograph of a carbonaceous' material film of a collector manufactured in Example 1 of the present invention;

FIG. 2 is a schematic perspective view showing a measurement cell used in Example 1 of the present invention;

FIG. 3 is a graph showing the CV measurement results of a three-electrode cell in Example 1 of the present invention;

FIG. 4 is a graph showing the AC impedance measurement result of the three-electrode cell in Example 1 of the present invention;

FIG. 5 is a graph showing the AC impedance measurement result of a three-electrode cell in Comparative Example 1;

FIG. 6 is a graph showing the current response curves (CV curves) of a three-electrode type electrolyte cell in Example 2 of the present invention;

FIG. 7 is a graph showing the current response curves (CV curves) of a three-electrode type electrolyte cell in Comparative Example 2;

FIG. 8 is a graph showing other current response curves (CV curves) of the three-electrode type electrolyte cells in Example 2 of the present invention and Comparative Example 2;

FIG. 9 is a graph showing the potential sweep rate of an evaluation electrode in Example 8 of the present invention by a cyclic voltammogram at 10 mV/sec;

FIG. 10 is a graph showing the potential-time relationship of a three-electrode type electrolyte cell in Example 8 of the present invention;

FIG. 11 is a sectional view showing a test cell used in Example 9 of the present invention;

FIG. 12 is a graph showing the charge/discharge capacity of the test cell as a function of the number of cycles in Example 9 of the present invention;

FIG. 13 is a graph showing the charge/discharge characteristic at the 25th cycle of the test cell in Example 9 of the present invention;

FIG. 14 is a schematic perspective view'showing a test cell used in Example 10 of the present invention;

FIG. 15 is a graph showing the terminal voltage of a test cell during discharge at the 31st to 36th cycles in Example 11 of the present invention;

FIG. 16 is a graph showing cyclic voltammograms when poly(MPY-3) in Example 12 of the present invention and polypyrrol, as a comparative compound, which was polymerized to the same extent as poly(MPY-3), were electrochemically measured; and

FIG. 17 is a view showing a thin lithium secondary battery assembled in Example 13 of the present invention.

Best Mode for Carrying Out of the Invention

The present invention will be described in detail below.

This positive electrode for lithium secondary battery has a structure including a collector formed on the surface of a conductive substrate by using a carbonaceous material film, and a positive electrode material layer carried on the carbonaceous material film side of the collector and containing an organic sulfide compound as a main active material.

The collector and positive electrode material layer will be described in detail below.

(1) Collector

The conductive substrate forming this collector is preferably made of a metal having lower density than copper. Practical examples of the metal are aluminum, titanium, nickel, and alloys consisting primarily of these metals. This conductive substrate is usually a thin plate.

The carbonaceous material film formed on the surface of the conductive substrate has a composition containing a carbonaceous material and binder. This binder must have resistance to an organic solvent.

Examples of the carbonaceous material are graphite materials such as natural graphite and artificial graphite, coke, carbon fibers, mesophase carbon microbeads, a graphitization retardant material as a carbide of synthetic resin, and a carbon nanotube. These materials can be used singly or in the form of a mixture of two or more types of them.

The carbonaceous material is preferably made up of particles having an average particle size of 20 nm to 30 μm. These carbonaceous material particles are desirably a mixture of fine particles having a particle size of preferably 0.02 to less than 1.0 μm, and more preferably, 0.05 to 0.5 μm, and coarse particles having a particle size of preferably 1 to 30 μm, and more preferably, 2 to 10 μm. The mixing ratio of the fine and coarse particles is favorably 85 : 15 to 15 : 85 as a weight ratio. If the ratio of the fine particles in the carbonaceous material particles exceeds 85 as a weight ratio, the amount of coarse particles effectively decreases, and this may lower the conductivity of the carbonaceous material film formed on the surface of the conductive substrate. If the ratio of the fine particles in the carbonaceous material particles is less than 15 as a weight ratio, the amount of fine particles which function as a current path network with respect to the coarse particles effectively decreases, and this may lower the conductivity of the carbonaceous material film formed on the surface of the conductive substrate. This may also lower the adhesion of the carbonaceous material film to the substrate. The mixing ratio of the fine and coarse particles is more preferably 70 : 30 to 30 : 70 as a weight ratio.

Although the binder can be any polymeric material having resistance to an organic solvent used as an electrolyte, this binder is preferably a polymer or polymerization precursor consisting primarily of amidoimide or imide. The content of this binder in the carbonaceous material film is favorably 2 to 50 wt%. If the content of the binder is less than 2 wt%, the adhesion of the carbonaceous material film to the substrate may become insufficient. If the content of the binder exceeds 50 wt%, the binder amount increases, and this may lower the conductivity of the carbonaceous material film. The content of the binder is more favorably 5 to 30 wt%.

The carbonaceous material film preferably has a thickness of, e.g., 0.1 to 20 μm.

This carbonaceous material film is formed by, e.g., the following method. First, the aforementioned carbonaceous material and binder possessing the chemically stable properties to an organic solvent are mixed in an organic solvent, thereby dissolving the binder and dispersing the carbonaceous material in the solution to prepare a slurry. Subsequently, the surface of the conductive substrate is coated with this slurry, and the slurry is dried to form a carbonaceous material film. The coating method can be any of reverse coating, gravure coating, roll knife coating, comma coating, bar coating, and spray coating.

To improve the conductivity of the carbonaceous material film, fine particles and/or ultrafine particles of a conductive material can also be adhered to the surface of the carbonaceous material film. Examples of this conductive material are copper, iron, silver, nickel, palladium, gold, platinum, indium, indium oxide, and tin oxide. These materials can be used singly or in the form of a mixture.

(Positive Electrode Material Layer)

This positive electrode material layer contains an organic sulfide compound as a main active material. As this organic sulfide compound, it is possible to use, e.g., 2-mercaptoethylether, 2-mercaptoethylsulfide, 1,2-ethanedithiol, tetrathioethylenediamine, N,N'-dithio-N,N'-dimethylethylenediamine, trithiocyanuric acid, 2,4-dithiopyridine, 4,5-diamino-2,6-dimethylmercaptopyrimidine, N,N'-dimercaptopiperazine, 2,5-mercapto-1,3,4-thiadiazole (DMcT), s-triazine-2,4,6-trithiol, or 1,8-disulfidonaphthalene.

Instead of a compound such as 2-mercaptoethylether described above, a conductive polymer having a sulfide group and/or disulfide group can be used as the organic sulfide compound. This conductive polymer is a material having both charge storage properties and conductivity and hence is particularly preferable as the main active material of the positive electrode material layer. Examples of the conductive polymer are polymers such as a sulfur-containing aniline derivative, a sulfur-containing pyrrole derivative monomer, and a sulfur-containing thiophene derivative monomer.

The main active material can further contain a $\pi$ electron conjugate conductive polymer. Examples of this $\pi$ electron conjugate conductive polymer are polymers obtained by polymerizing thiophene, pyrrole, aniline, furan, and benzene. Practical examples are polyaniline, polypyrrol, polythiophene, and polyacene. These $\pi$ electron conjugate conductive polymers cause a redox reduction which is highly reversible at 0 to $\pm 1.0$ V with respect to an Ag/AgCl electrode.

The main active material can further contain an inorganic sulfur compound in addition to the $\pi$ electron conjugate conductive polymer. Sulfur such as $S_8$ is an example of this inorganic sulfur compound.

The positive electrode material layer can contain a conductive powder such as carbon or binder in addition to the main active material.

A lithium secondary battery according to the present invention will be described in detail below.

This lithium secondary battery includes the above-mentioned positive electrode, a negative electrode having a material which storages and releases lithium, and an electrolyte placed between these positive and negative electrodes.

Examples of the material for the negative electrode, which storages and releases lithium are a lithium-based metal material such as a lithium metal and lithium alloy (e.g., Li-Al alloy), and a lithium intercalation carbon material. This lithium-based metal material is preferably used in the form of a foil, in order to decrease the weight of the battery. Examples of the carbon material are natural graphite, artificial graphite, amorphous carbon, fibrous carbon, powdery carbon, petroleum pitch-based carbon, and coal coke-based carbon. These carbon materials are preferably particles having a diameter of 0.01 to 10 $\mu$m, or fibers having a fiber diameter of 0.01 to 10 $\mu$m and a fiber length of a few $\mu$m to a few mm.

As the electrolyte, it is possible to use liquid electrolytes prepared by dissolving lithium salts, such as $CF_3SO_3Li$, $C_4FgSO_3Li$, $(CF_3SO_2)_2NLi$, $(CF_3SO_2)_3CLi$, $LiBF_4$, $LiPF_6$, $LiClO_4$, and $LiAsF_6$, in nonaqueous solvents such as chain-like carbonate, cyclic carbonate, cyclic ester, nitrile compound, acid anhydride, amide compound, phosphate compound, and amine compound.

Practical examples of the nonaqueous solvents are ethylene carbonate, propylene carbonate, dimethoxyethane, $\gamma$-butyloractone, n-methylpyrrolidinone, N,N'-dimethylacetamide, a mixture of propylene carbonate and dimethoxyethane, and a mixture of sulforan and tetrahydrofuran.

As the electrolyte, A) gel electrolyte and B) solid electrolyte can be used instead of the aforementioned liquid electrolyte.

A) Gel Electrolyte (Polymer Gel Electrolyte)

The lithium salts described above can be used as electrolytes included in this gel electrolyte (polymer gel electrolyte).

Solvents for dissolving these electrolytes are nonaqueous solvents. These nonaqueous solvents include the above-mentioned chain-like carbonate, cyclic carbonate, cyclic ester, nitrile compound, acid anhydride, amide compound, phosphate compound, and amine compound.

As a polymer gel, it is preferable to use a polymer which consists of (a) an ethylene-unsaturated carboxylic acid polymer or its derivative and (b) polyalkylene oxide having a hydroxyl group at its one terminal end or its derivative, and in which the two materials are bonded by esterification.

As a polymer gel, it is also preferable to use a copolymer of acrylonitrile and methyl acrylate or methacrylic acid. In addition, it is possible to suitably use a polymer gel which contains (I) a unit derived from at least one type of monomer having one copolymerizable vinyl group, and (II) a unit derived from at least one type of compound selected from (II-a) a compound having two acryloyl groups and an oxyethylene group, (II-b) a compound having one acryloyl group and an oxyethylene group, and (II-c) a glycidyl ether compound. In this polymer gel, assuming that the total amount of the monomer (I) and the compound (II) (particularly, the crosslinking compound (II-a)) is 100 mol%, the ratio of the former is preferably 85 to 99.5 mol%, and the ratio of the latter is preferably 15 to 0.5 mol%.

Furthermore, it is possible to use a suitable polymer gel which contains (A) a unit derived from at least one type of monomer having one copolymerizable vinyl group, (B) a unit derived from a compound having two acryloyl groups' and an oxyethylene group, and (C) a unit derived from a plasticized compound having a polymerizable group. In this polymer gel, assuming that the total amount of the monomer (A), crosslinking compound (B), and plasticized compound (C) is 100 mol%, (A) + (C) is preferably 85 to 99.5 mol%, and (B) is preferably 15 to 0.5 mol%. Also, assuming that (A) + (C) is 100 mol%, (A) is preferably 75 to 99 mol%, and (C) is preferably 25 to 1 mol%.

As the monomer (I) or (A) described above, it is possible to use, e.g., (metha)acrylonitrile, ($\alpha$-alkyl)acrylic acid or its alkylester, ($\alpha$-alkyl)acrylic fluorine-containing alkylester, ($\alpha$-fluorine-containing alkyl)acrylic fluorine-containing alkylester, vinylester, vinylalkylether, allylalkylether, allylester, vinyl acetate, vinyl alcohol, vinyl chloride, vinylidene chloride, or cyclic olefin.

As the compound (II-a) or (B), a compound represented by formula (1) or (2) below can be used.

$$H_2C=C(R)COO(CH_2CH_2O)_n\text{-}COC(R)=CH_2 \tag{1}$$

In this formula (1), $n$ is a number from 1 to 23, R is $C_mH_{2m+1}$, and $m$ is a number from 1 to 4.

$$H_2C=C(R)COO[(CH_2CH_2O)_p\text{-}(CH_2CH(R^1)O)_q\text{-}(X)_r\text{-}$$

$$\text{-}(CH_2CH_2O)_p]COC(R)=CH_2 \tag{2}$$

In this formula (2), R is $C_mH_{2m+1}$, $m$ is a number from 1 to 4, $R^1$ is H or $CH_3$, X is a bisphenol group; $p \leqq 16$, $q \leqq 34$, and $r$ is 0 or 1.

As the compound (II-b), it is possible to use at least one type of compound selected from compounds represented by formulas (3), (4), and (5) below.

$$H_2C=C(R)COO(CH_2CH(R^1)O)_s\text{-}R^2 \tag{3}$$

In this formula (3), R is $C_mH_{2m+1}$. $m$ is a number from 0 to 4, $R^1$ and $R^2$ are H or $CH_3$, and $s$ is a number from 1 to 100.

$$H_2C=CHCH_2O\text{-}(CH_2CH_2O)_x\text{-}(CH_2CH(R^1)O)_y\text{-}R^3 \tag{4}$$

In this formula (4), $R^1$ is H or $CH_3$, $R^3$ is H or an alkyl group, and $x$ and $y$ represent molar percentages meeting x + y = 100, i.e., x = 100 and y = 0, or $x$ is 50 or less and $y$ is 50 or more.

$$H_2C=CHCOO(CH_2CH_2O)_x\text{-}(CH_2CH(R^1)O)_y\text{-}R^2 \tag{5}$$

In this formula (5), $R^1$ and $R^2$ are H or $CH_3$, and $x$ and $y$ represent molar percentages meeting x + y = 100, i.e., x = 0 and y = 100, or $x$ is 50 or more and $y$ is 50 or less.

As the glycidylether compound (II-c), it is possible to use methyleneglycidylether, ethylglycidylether, or alkyl-, alkenyl-, aryl-, or alkylaryl-polyethyleneglycolglycidylether.

As the compound (C), it is possible to use the compound (II-b), benzyl methacrylate, isobornyl methacrylate, diethylaminoethylbenzylchloride methacrylate, diethylaminoethyl methacrylate, dimethylaminoethylmethylchloride methacrylate, trifluoroethyl methacrylate, cyclohexyl methacrylate, 2-methacryloyloxyethyl phthalate, 2-methacryloyloxyethylhexahydrophthalate, butyl epoxystearate, or dioctyl epoxyhexahydrophthalate.

Note that the polymer gel electrolyte can be obtained by dipping the polymer in an electrolytic solution or by polymerizing the components (monomer/compound) of the polymer in the presence of an electrolytic solution.

B) Solid Electrolyte

This solid electrolyte consists of a lithium-containing salt or a polymer containing this salt and molten salt. Examples of the lithium-containing salt are LiI, $Li_3N$-LiI-$B_2O_3$, LiI·$H_2O$, Li-$\beta$-$Al_2O_3$, and $Li_2S$-$SiS_2$-LiI. An example of a polymer electrolyte containing this lithium-containing salt is polyethylene oxide in which the lithiumion salt is dissolved.

When an electrolyte is mixed in at least one of the positive and negative electrodes, it is preferable to use a solid electrolyte composition consisting of polyether obtained by adding ethylene oxide and butylene oxide to polyamine, an ion-exchanging compound having a layered crystal, and a lithiumion salt.

The polyether can be obtained by adding ethylene oxide and butylene oxide to polyamine in the presence of an alkali catalyst at 100 to 180°C and 1 to 10 atm.

As polyamine as a component of the polyether, polyethyleneimine, polyalkylenepolyamine, or a derivative of one of these can be used. Examples of polyalkylenepolyamine are diethylenetriamine, triethylenetetramine, hexamethylenetetramine, and dipropylenetriamine. The number of added moles of ethylene oxide and butylene oxide is 2 to 150 moles per active hydrogen of polyamine. The molar ratio (EO/BO) of added ethylene oxide (EO) to butylene oxide (BO) is 80/20 to 10/90. The average molecular weight of polyether thus obtained is 1,000 to 5,000,000. This polyether is preferably contained in the solid electrode composition at a ratio of 0.5 to 20 wt%.

Examples of the ion-exchanging compound having the layered crystal structure are silicate-containing clay minerals such as montmorillonite, bentonite, hectorite, saponite, and smectite, phosphoric esters such as zirconium phosphate and titanium phosphate, vanadic acid, antimonic acid, tungstic acid, and compounds obtained by modifying these compounds by an organic cation such as a quaternary antimoniumion salt or by organic polar compounds such as ethylene oxide and butylene oxide.

In this solid electrolyte composition, polyether as one of components has surface detergent activity. Therefore, when this composition is mixed in at least one of the positive or negative electrodes, this polyether disperses evenly within the composition and decreases the potential polarization.

As explained above, the positive electrode for lithium secondary battery according to the present invention comprises a collector obtained by forming a carbonaceous material film on the surface of a conductive substrate, and a positive electrode material layer composed of an organic sulfide compound as a main active material on the carbonaceous material film of this collector.

With this arrangement, even if the organic sulfide compound in the positive electrode material layer causes a redox reaction, the surface (on the positive electrode material layer side) of the conductive substrate of the collector, which carries the positive electrode material layer is covered with the carbonaceous material film and hence functions as a protective film against the redox reaction. This prevents oxidative corrosion even when a light metal such as aluminum (Al), other than copper, is used as the conductive substrate. In addition, since the carbonaceous material film has high conductivity, the collector having this carbonaceous material film has a high electricity collecting capability with respect to the positive electrode material layer. Consequently, it is possible to use a conductive substrate made of a light metal such as Al, other than copper, while high energy density resulting from the organic sulfide compound is maintained, and to obtain a positive electrode for lithium secondary battery, which increases the electrical energy extractable per unit weight.

Also, even when this positive electrode is incorporated into a lithium secondary battery and a positive voltage is applied, dissolution of the conductive substrate made of a light metal such as Al can be prevented. As a consequence, the positive electrode material layer can be well carried for long time periods, without being peeled from the collector having this substrate.

Especially when the carbonaceous material film which contains a carbonaceous material and binder (having resistance to an organic solvent) and in which the carbonaceous material is made up of particles having an average particle size of 20 nm to 30 μm, and fine particles having a particle size of 0.02 to less than 1.0 μm and coarse particles having a particle size of 1 to 30 μm are mixed at a weight ratio of 85 : 15 to 15 : 85 is used, the coarse particles principally form a good electrical current path, and the fine particles present between these coarse particles function as a network. Additionally, since the carbonaceous material is made up of the coarse and fine particles, closest packing of these particles is possible. Accordingly, the carbonaceous material film can be well adhered to the conductive substrate with a small amount of binder. As a consequence, the conductivity of the whole carbonaceous material film can be further improved, so the collector having this film can achieve further improved electricity collecting capability with respect to the positive electrode material layer.

Also, fine projections and recesses are formed on the surface of the carbonaceous material film having the coarse and fine particles of the carbonaceous material. Therefore, the adhesion of the positive electrode material layer formed on this carbonaceous material film can be improved by the anchor function of these projections and recesses.

Furthermore, since the lithium secondary battery according to the present invention includes the positive electrode described above, the electrical energy extractable per unit weight can be increased.

The present invention will be described in more detail below using preferred examples. However, the present invention is not limited by these examples.

(Example 1)

[Manufacture of Current Collector]

A slurry was prepared by thoroughly kneading 20 wt% of graphite having an average particle size of 5 μm, 20 wt% of carbon black, 20 wt% of polyamidoimide resin (N8020 (trade name) manufactured by TOYOBO CO., LTD.), and 40 wt% of N-methyl-2-pyrrolidone (NMP) solvent. This slurry was coated on the surface of a conductive substrate made of an aluminum (Al) foil (manufactured by Nilaco Ltd.) with a predetermined thickness by using a bar coater. After that, the resultant material was preliminarily dried at 150°C for 1 hr and then hardened by further heating at 200°C for 1 hr, thereby manufacturing a current collector. Note that the aluminum foil was directly used as obtained without performing any specific surface treatment.

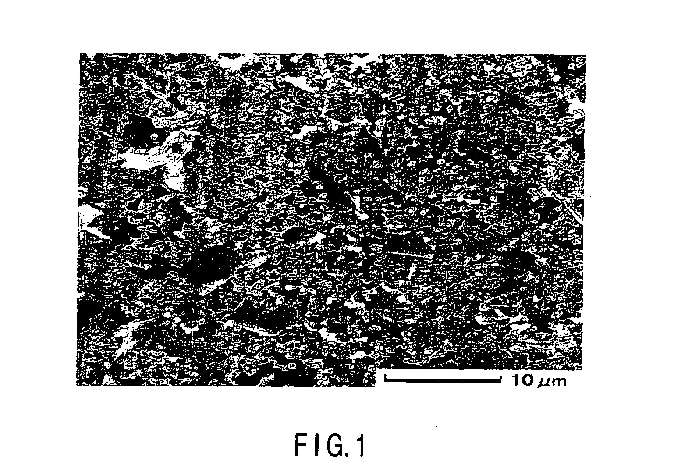

In the obtained current collector, a carbonaceous material film of 10 to 30 μm thickness was formed on the surface of the conductive substrate made of the Al foil. FIG. 1 shows a scanning electron microscope (SEM) photograph of the surface of the current collector.

This carbonaceous material film had carbonaceous material particles having an average particle size of 5 μm. Also, fine carbonaceous material particles having a particle size of 0.1 to 0.5 μm and coarse carbonaceous material particles having a particle size of 2 to 10 μm were mixed at a weight ratio of 50 : 50.

[Evaluation of Current Collector]

A total solid type measurement cell was assembled using the obtained current collector, and the following electrode characteristics were used in evaluation.

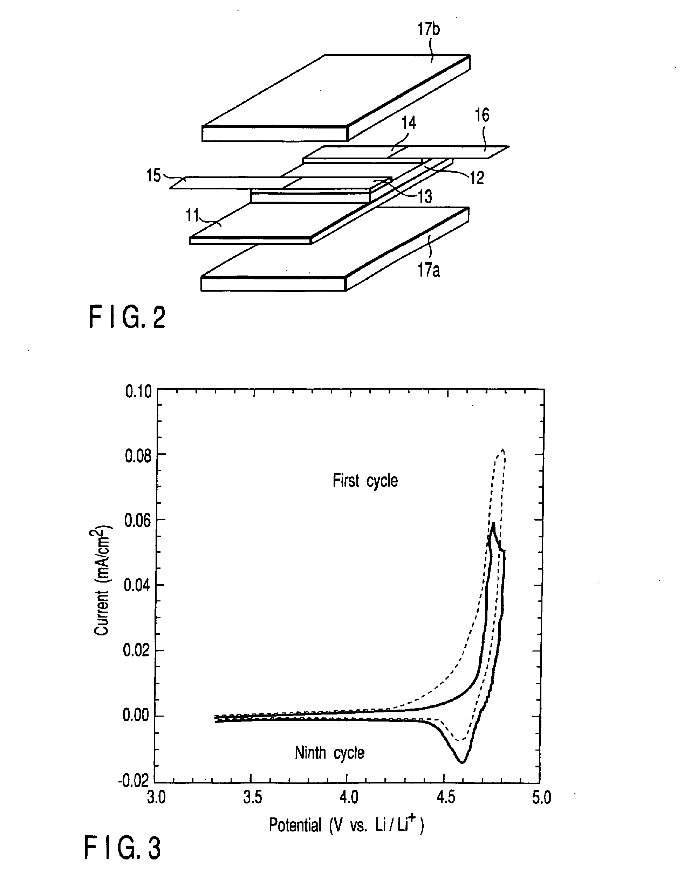

This measurement cell was a three-electrode cell formed as follows. As shown in FIG. 2, a polyacrylonitrile (PAN)-based thermoplastic gel electrolyte sheet 12 cutting into a size of 2 cm × 2 cm, was overlapped on a collector 11 and the residual portion of this collector 11 was exposed for the lead connection. In addition, two metal lithium foils 13 and 14 each having a size of 2 cm × 1 cm were placed on the electrolyte film 12 with a spacing of 1 mm, and adhered to the film. After that, lead electrodes 15 and 16 made of stainless steel plates were attached to the metal lithium foils 13 and 14, respectively, and the two sides of the resultant structure were sandwiched by glass plates 17 and 18.

The PAN-based thermoplastic gel electrolyte film 12 described above was formed as follows. That is, a 20 wt% of a acrylonitrile-methylacrylate copolymer (PAN-MA) and a 1 : 1 solvent mixture, containing 1 mol/L of lithium tetrafluoroborate ($LiBF_4$), of propylene carbonate (PC) and ethylene carbonate (EC) were mixed. The mixture dissolved at 150°C was poured into a stainless steel tray, and slowly cooled. Then, an electrolyte gel sheet of 0.2 to 0.5 mm in thickness was obtained.

(Comparative Example 1)

A three-electrode measurement cell was assembled following the same procedures as in Example 1 except that an untreated Al foil was used as a current collector.

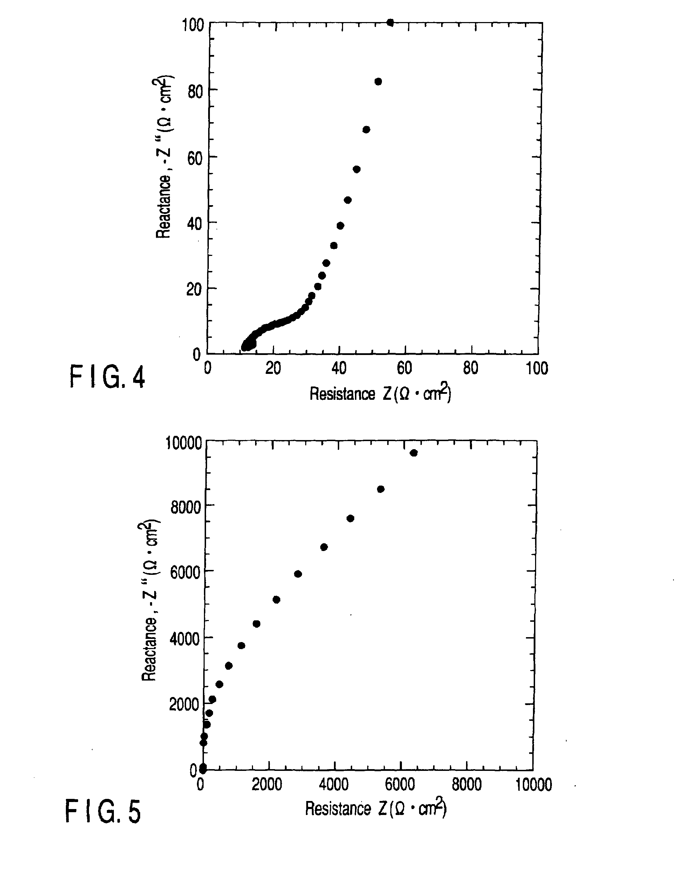

The obtained three-electrode measurement cells of Example 1 and Comparative Example 1 were evaluated by using a cyclic voltammetry method (CV method) and an AC impedance method (AC method). FIG. 3 shows the results of the CV measurement of the three-electrode measurement cell of Example 1. FIGS. 4 and 5 show the results of the AC impedance measurements of Example 1 and Comparative Example 1, respectively.

As shown in FIG. 3, in the three-electrode measurement cell of Example 1 in which the collector having the carbonaceous material film formed on it was incorporated, the rise of an electrical current near 4.5 V reduced after the potential scanning was. repeated.

On the other hand, FIG. 5 shows that in the three-electrode cell of Comparative Example 1 in which the collector made of an Al foil was incorporated, electron transfer in the collector interface did not easily occur.

Also, the charge transfer resistances (Rct) were estimated from the Cole-Cole plots of Example 1 and Comparative Example 1 shown in FIGS. 4 and 5. Consequently, Rct = 34 $\Omega cm^2$ in the collector of Example 1, whereas Rct = 23 $k\Omega cm^2$ in the Al foil collector of Comparative Example 1, i.e., there was a big difference between them. This charge transfer resistance (Rct) exhibited substantially the same value even when repetitively measured. This indicates that the collector coated with the carbonaceous material film in Example 1 was given electrode characteristics and conductivity superior to those of the collector made of an Al foil in Comparative Example 1.

Accordingly, a positive electrode for lithium secondary battery having excellent performance is expected to be realized by forming, on this collector, a positive electrode material layer containing an organic sulfide compound as a main active material.

(Example 2)

[Manufacture of Collector]

Carbon-based conductive paint ink (EB-815 (trade name) manufactured by Acheson (Japan) Ltd.) was used as a slurry. This ink has a composition containing 5 to 20 wt% of artificial graphite, 5 to 20 wt% of carbon black, 5 to 20 wt% of amidoimide resin, 0 to 1 wt% of butyral resin, and N-methylpyrrolidone solvent.

The entire surface of a conductive substrate made of a 40- μm thick Al foil (H8079) was coated with this carbon-based conductive paint ink by using a direct gravure coating apparatus. After that, the resultant material was preliminarily heated at 150°C for 1 hr and then hardened as it was further heated at 250°C for 30 min, thereby manufacturing a collector.

In the obtained collector, a carbonaceous material film of 5 to 20 μm thickness was formed on the surface of the conductive substrate made of an Al foil. This carbonaceous material film had carbonaceous material particles having an average particle size of 10 μm. Also, fine carbonaceous material particles having a particle size of 0.05 to 0.5 μm and coarse carbonaceous material particles having a particle size of 5 to 20 μm were mixed at a weight ratio of 1 : 2.

[Evaluation of Current Collector]

After lead wires were connected to the obtained collector, the surface of this collector was insulated by coating with a silicone adhesive such that the surface of the carbonaceous material film was exposed to an area of about 1 cm$^2$, thereby forming an evaluation electrode. Note that the exposed portion of the carbonaceous material film functions as an evaluation window. This evaluation electrode was used to form a three-electrode type electrolytic solution cell having a reference electrode made of a lithium metal and a counter electrode made of a platinum plate, and the following electrochemical measurements were performed.

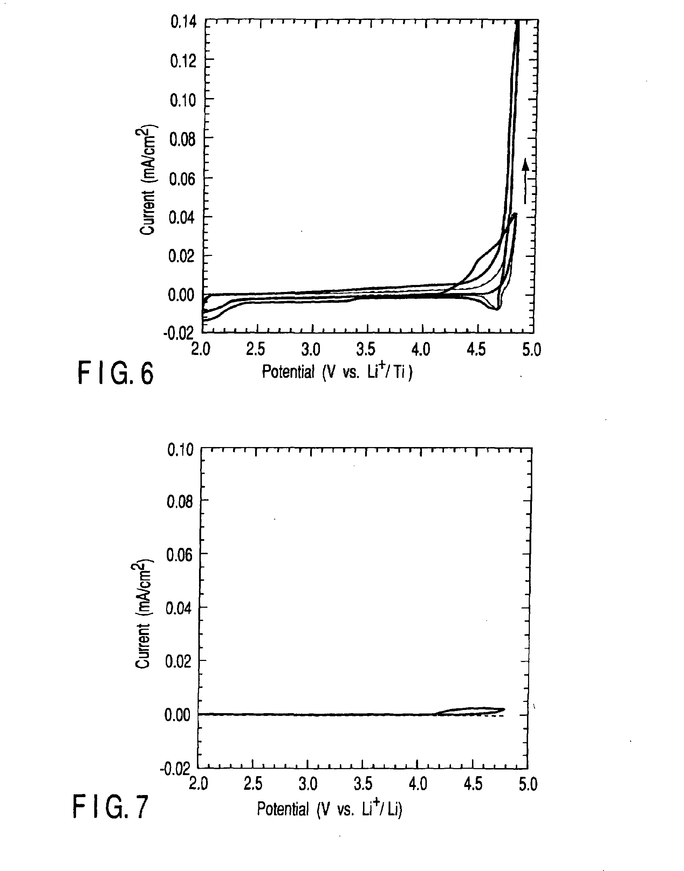

As the measurement solution, a 1 : 1 solvent mixture, containing 1 mol/L of lithium tetrafluoroborate (LiBF$_4$), of propylene carbonate (PC) and ethylene carbonate (EC)- was used. Potential scanning was repetitively performed at a potential sweep rate of 2 mV/sec within a potential range of 2.0 to 4.8 V (vs. Li/Li$^+$). FIG. 6 shows the obtained current response curves (CV curves).

As is apparent from FIG. 6, the potential window widened whenever scanning was repeated. Within a potential range of 2.5 to 4.3 V vs. Li/Li$^+$, no electrode reaction of the collector itself of Example 2 occurred. So, this electrode can be used as an electrode for electrolysis at a potential within this range.

(Comparative Example 2)

A three-electrode type electrolysis cell was constructed following the same procedures as in Example 2 except that a collector made of an untreated Al foil (H8079) was used, and the same electrochemical measurements as in Example 2 were performed. The obtained current potential response curve (CV curves) is shown in FIG. 7.

As shown in FIG. 7, an oxidation current was observed from around 4.3 V in this collector made of the Al foil (H8079). In the collector of Comparative Example 2, therefore, the rise of the electrical current at a positive potential higher than 4.3 V in the collector of Example 2 was presumably an electrical current to which the oxidation reaction of aluminum was related.

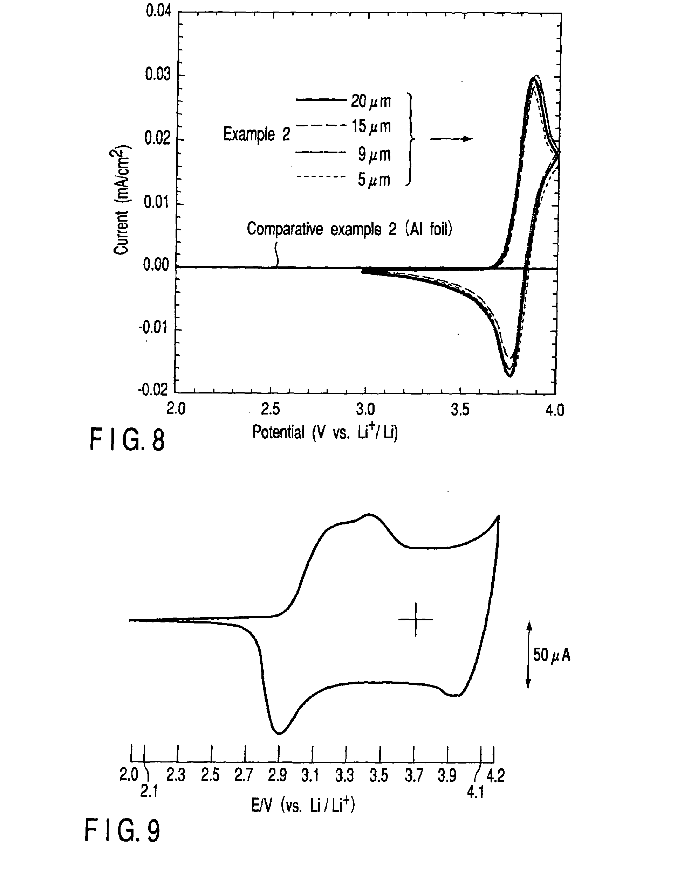

To check the reaction responses of the collectors (the thicknesses of the carbonaceous material films formed on the surfaces of these collectors were 20, 15, 10, 9, and 5 μm) and the collector of Comparative Example 2, CV measurements were performed using an N-methyl-2-pyrrolidone (NMP) solution containing 2 mM of ferrocene and 20 a of LiBF$_4$, instead of the measurement solution described above. The results are shown in FIG. 8.

As is evident from FIG. 8, no current response was found in the collector made of an Al foil in Comparative Example 2. In contrast, in each collector of Example 2 in which the carbonaceous material film having a predetermined thickness was formed on the Al foil, a peak potential difference was 70 to 110 mV, i.e., a current response which was a substantially reversible electrode reaction was obtained.

From the above measurements, the collector of Example 2 in which a predetermined carbonaceous material film was formed on the surface of an Al foil had superior electricity collecting characteristics for electrolysis.

(Example 3)

A collector was manufactured by forming a carbonaceous material on the surface of a conductive substrate following the same procedures as in Example 2 except that a 15- μm thick titanium (Ti) foil was used as the conductive substrate. This collector was used to form a three-electrode type electrolytic solution cell and perform electrochemical measurements following the same procedures as in Example 2. Consequently, characteristics similar to Example 2 in which an Al foil was used as the conductive substrate were obtained.

(Example 4)

A collector was manufactured by forming a carbonaceous material on the surface of a conductive substrate following the same procedures as in Example 2 except that a 15 μm thick nickel (Ni) foil was used as the conductive substrate. This collector was used to form a three-electrode type electrolytic solution cell and perform electrochemical measurements following the same procedures as in Example 2. Consequently, characteristics similar to Example 2 in which an Al foil was used as the conductive substrate were obtained.

(Example 5)

An untreated Al foil was dipped in an aqueous alizarin(1,2-dihydroxyanthraquinone) solution for 1 hr to form an alizarin-aluminum complex undercoat on the surface. A collector was manufactured following the same procedures as in Example 2 except that a carbonaceous material was formed on the surface of this undercoat. The formation of this undercoat made the adhesion of the obtained collector higher than that obtained by surface roughing which is normally performed.

Also, the obtained collector was used to form a three-electrode type electrolytic solution cell and perform electrochemical measurements following the same procedures as in Example 2. Consequently, characteristics similar to Example 2 in which an Al foil was used as the conductive substrate were obtained.

(Examples 6 & 7)

Collectors were manufactured by forming carbonaceous material films on the surfaces of conductive substrates following the same procedures as in Example 2 except that an aluminum punching metal and mesh metal were used as the conductive substrates. These collectors were used to form three-electrode type electrolytic solution cells and perform electrochemical measurements following the same procedures as in Example 2. Consequently, both the collectors had characteristics similar to Example 2 in which an Al foil was used as the conductive substrate.

(Example 8)

[Preparation of First Ink for Positive Electrode Material]

3 g of $\gamma$-butyl lactone ($\gamma$-BL)were added to 2 g of 2,5-dimercapto-1,3,4-thiadiazole (to be abbreviated as DMcT hereinafter) manufactured by Aldrich Ltd. After that, 1 g of polyaniline (PAn) manufactured by NITTO DENKO CORP. was added to the solution, and the resultant mixture was kneaded by using a centrifugal stirrer to obtain a paste material. Subsequently, an appropriate amount of $\gamma$-BL was added as a solvent to this paste material to prepare a first ink for positive electrode material consisting of
DMcT : PAn : $\gamma$-BL = 2 : 1 : 10 (weight ratio) and having a viscosity of 9 to 15 Pa·s.

[Preparation of Second Ink for Positive Electrode Material]

3 g of a $\gamma$-butyl lactone ($\gamma$-BL) solution (manufactured by KISHIDA CHEMICAL CO., LTD.) containing 1 mol/L of LiBF$_4$ were added to 2 g of 2,5-dimercapto-1,3,4-thiadiazole (to be abbreviated as DMcT hereinafter) manufactured by Aldrich Ltd. After that, 1 g of polyaniline (PAn) manufactured by NITTO DENKO CORP. was added to the solution, and the resultant mixture was kneaded by using a centrifugal stirrer to obtain a paste material. Subsequently, an appropriate amount of $\gamma$-BL was added as a solvent to this paste material to prepare a second ink for positive electrode material having a viscosity of 9 to 15 Pa·s.

[Manufacture of Positive Electrode]

The surface of the carbonaceous material film on one side of the collector formed in Example 2 was coated with the first ink for positive electrode material at 5 to 10 $\mu$m thick by using a bar coater, and the ink layer was dried in vacuum at 60°C for 2 hrs. Subsequently, the surface of this first electrode material layer was coated with the second ink for electrode material at 10 to 100 $\mu$m thick, and the ink layer was dried in a vacuum at 60°C for 2 to 12 hrs. In this manner, a composite positive electrode was manufactured.

The obtained positive electrode was cut into a size of 10 to 50 mm. The entire surface of a sample was insulated by being coated with a silicone adhesive, except for a portion at a distance of 5 mm from one end and a circular portion (at a distance of 5 mm from the other end) 5 mm in diameter as an evaluation window, thereby forming an evaluation electrode. The entire coating layer on the exposed portion at one end was removed with a knife, and a lead wire was connected to this portion by a clip. This evaluation electrode was used to manufacture a three-electrode type electrolytic solution cell having a lithium metal reference electrode and platinum plate counter electrode, and the following electrochemical measurements were performed. As a measurement solution, a 1 : 1 solvent mixture, containing 1 mol/L of lithium tetrafluoroborate (LiBF$_4$), of propylene carbonate (PC) and ethylene carbonate (EC) was used.

FIG. 9 shows the cyclic voltammogram at 10 mV/sec potential sweep rate of the evaluation electrode. As shown in FIG. 9, the polyaniline functions as an electrode reaction catalyst to accelerate the redox reaction of DMcT.

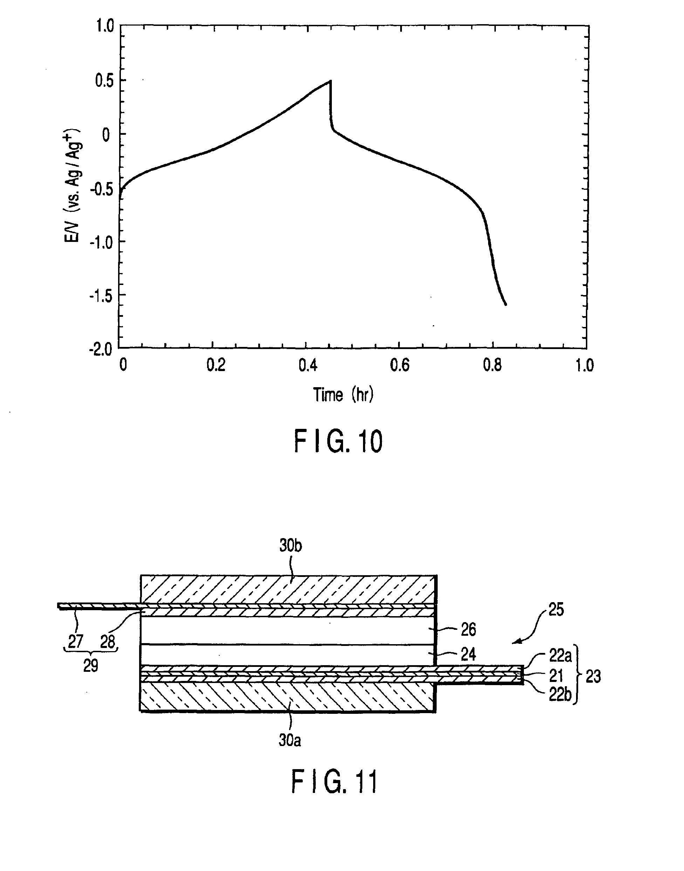

Also, the three-electrode type electrolysis solution cell was tested by electrolysis at a constant current by using a galvanostat. FIG. 10 shows the potential-time relationship when electrolysis was performed at a current density with which the charge/discharge rate was equivalent to 2 C. FIG. 10 reveals that the collector of Example 8 can be used even at high charge/discharge rate.

(Example 9)

[Preparation of Positive Electrode Material Ink]

200 parts by weight of 2,5-dimercapto-1,3,4-thiadiazole (to be abbreviated as DMcT hereinafter) manufactured by Aldrich Ltd., 100 parts by weight of polyaniline (PAn) manufactured by NITTO DENKO CORP., 10 parts by weight of ketjen black, 10 parts by weight of carbon black, 10 parts by weight of artificial graphite, and 10 parts by weight of a polyacrylonitrile-methylacrylate copolymer (PAN-MA) was added to a solution mixture (PC-EC) of propylene carbonate and ethylene carbonate (weight ratio = 1 : 1), which was manufactured by KISHIDA CHEMICAL CO., LTD. and containing 1 mol/L of $LiBF_4$. The resultant material was milled and blended for two days by using a ball mill, thereby preparing an ink for a composite positive electrode material.

[Manufacture of Positive Electrode]

The surface of one side of the collector obtained in Example 2 was coated with the ink for the composite positive electrode material at 250 to 300 $\mu$m thick by using a bar coater, and the ink layer was dried at 100°C for 10 min. In this way, a 100 to 200 $\mu$m thick positive electrode sheet in which the composite positive electrode material layer having an area of 2 cm $\times$ 2 cm was formed on the one-side surface of the collector was manufactured.

[Preparation of Gel Electrolyte]

A copolymer (AN : VAc = 97 : 3 (weight ratio), number-average molecular weight = 282,000) of acrylonitrile (AN) and vinyl acetate (VAc) was added to an electrolytic solution, available from MITSUBISHI CHEMICAL CORPORATION, which was a 1 : 1 (weight ratio) solvent mixture of propylene carbonate (PC) and ethylene carbonate (EC) in which 1M lithium boron tetrafluoride ($LiBF_4$) was dissolved. The resultant material was mixed in a mortar to prepare a viscous liquid material. This liquid material was evenly cast in a stainless steel tray, heated by a hot plate at 120°C, and cooled, thereby manufacturing a gel electrolyte sheet.

[Assembly of Battery]

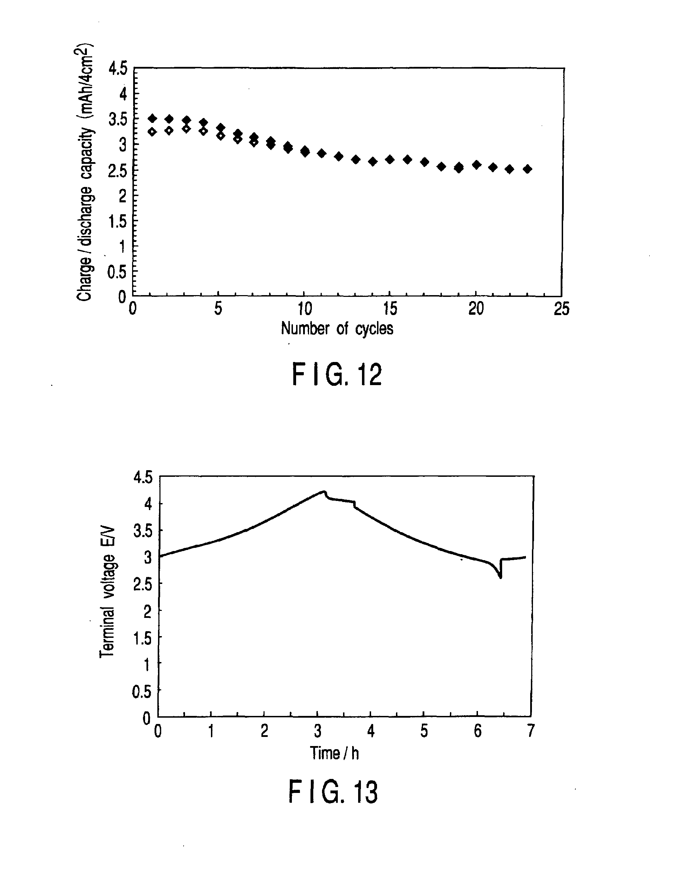

A test cell shown in FIG. 11 was assembled by using the positive electrode sheet, the gel electrolyte sheet having an area of 2 cm $\times$ 2 cm, and a negative electrode formed by making a nickel foil to carry a metal lithium foil having an area of 2 cm $\times$ 2 cm.
That is, as shown in FIG. 11, this test cell includes a positive electrode 25, gel electrolyte sheet 26, negative electrode 29, and two glass plates 30a and 30b. The positive electrode 25 has a collector 23 and positive electrode material layer 24.
The collector 23 is manufactured by forming carbonaceous material films 22a and 22b on the both-side surfaces of a conductive substrate 21 made of an Al foil. The positive electrode layer 24 is carried on a one-side surface of the collector 23 and has an area of 2 cm $\times$ 2 cm. The gel electrolyte sheet 26 is overlapped on the positive electrode material layer 24 of the positive electrode 25. The negative electrode 29 has a structure in which a metal lithium foil 28 having an area of 2 cm $\times$ 2 cm is carried on a nickel foil 27 such that this metal lithium foil 28 is in contact with the electrolyte sheet 26. The glass plates 30a and 30b sandwich these positive electrode 25, electrolyte sheet 26, and negative electrode 29 by using a clip (not shown). Note that the collector 23 and nickel foil 27 are extended in opposite directions in order to extract an current. This test cell was assembled in an argon ambient containing water and having a dew point of -90°C or less and an oxygen concentration of 1 ppm or less, in a glove box (manufactured by Miwa Seisakusho Ltd.) entirely fullfielded with argon.
The obtained test cell of Example 9 was subjected to a charge/discharge test under the following conditions.

[Charge/Discharge Test]

The test cell was placed in the glove box containing the argon ambient having a dew point of -90°C or less and an oxygen concentration of 1 ppm or less. A charge/discharge test was conducted at a charge/discharge rate of 0.2 C and a charge/discharge depth of 80% by using a charge/discharge test apparatus (manufactured by IWATSU ELECTRIC CO., LTD.).
FIG. 12 shows the values of charge/discharge capacities of the test cell of Example 9 as a function of the number of cycles. FIG. 13 shows the charge/discharge characteristic at the 25th cycle.

It is evident from FIGS. 12 and 13 that the cell including the positive electrode of Example 9 having the collector prepared by forming the carbonaceous material film on the Al foil surface deteriorated little and had a large current capacity. Therefore, this cell is expected to have excellent secondary battery characteristics.

(Examples 10-1 & 10-2)

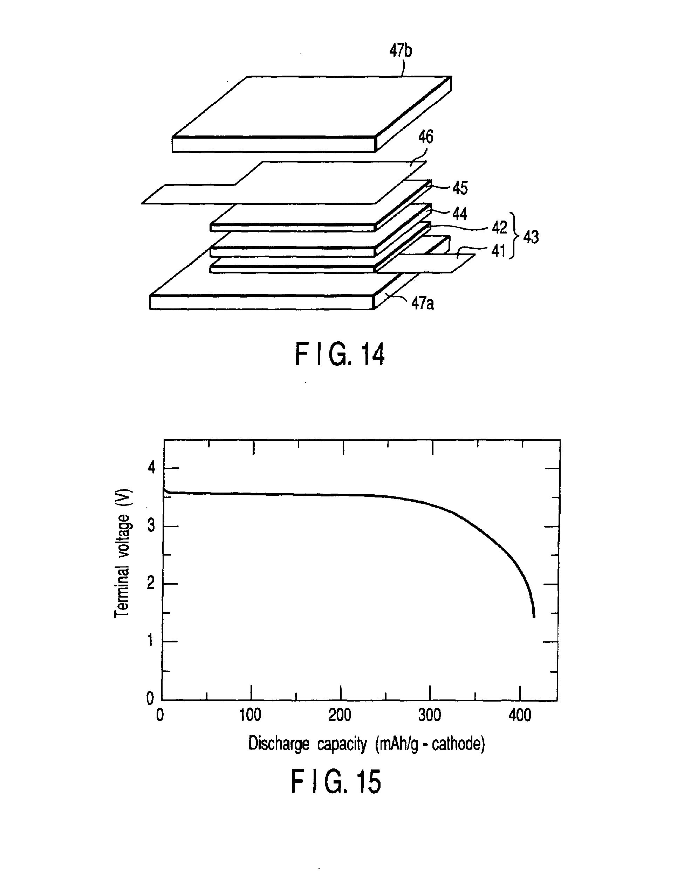

As shown in FIG. 14, a test cell was assembled by stacking, in the order named, a positive electrode 43 having a structure in which a positive electrode material layer 42 was formed on one surface of a collector 41, a gel electrolyte sheet 44 having an area of 2 cm $\times$ 2 cm, a metal lithium foil 45 having an area of 2 cm $\times$ 2 cm as a negative electrode, and a nickel foil 46 for carrying this lithium foil 45, and sandwiching the stacked electrodes with two glass plates 47a and 47b.

The positive electrode 43 was manufactured by forming a positive electrode material layer 42 (thin layer) of polyaniline.(PAn) available from NITTO DENKO CORP. in an area of 2 cm $\times$ 2 cm on one surface of a collector 41 (the thickness of carbonaceous material film was 7 $\mu$m) obtained in Example 2 described earlier (Example 10-1), or by forming a positive electrode material layer 42 (thin layer) of poly-2-methoxyaniline-s-sulfonic acid (PMAS) available from NITTO DENKO CORP. in an area of 2 cm $\times$ 2 cm on one surface of the same collector (Example 10-2).

The thin gel electrolyte film 44 was formed by well mixing 2 g of polyacrylonitrile and 8 g of SOLRITE (propylene carbonate : ethylene carbonate = 1 : 1, and containing 1M LiBF$_4$ manufactured by KISHIDA CHEMICAL CO., LTD.) in a mortar, heating and dissolving the mixture at 120°C for 15 min, pouring the solution into a jig, and leaving the solution to stand until the temperature became room temperature.

(Comparative Examples 3-1 & 3-2)

Test cells were assembled following the same procedures as in Example 10-1 except that a structure (Comparative Example 3-1) in which a thin layer of PAn. available from NITTO DENKO CORP. was formed on one-side surface of a collector made of a copper foil and a structure (Comparative Example 3-2) in which a thin layer of PMAS available from NITTO DENKO CORP. was formed on the same collector were used as positive electrodes.

A charge/discharge test was conducted on the obtained cells of Examples 10-1 and 10-2 and Comparative Examples 3-1 and 3-2 under the following conditions.

[Charge/Discharge Test)

Each test cell was placed in a glove box containing an argon ambient having a dew point of -90°C or less and an oxygen concentration of 1 ppm or less. The charge/discharge test was conducted at a charge/discharge rate of 0.2 C and a charge/discharge depth of 80% by using a charge/discharge test apparatus (manufactured by IWATSU ELECTRIC CO., LTD.).

Consequently, good charge/discharge characteristics were obtained by the test cell of Example 10-1 which included the positive electrode obtained by coating the collector having the carbonaceous material film formed on it with the thin PAn film. In contrast, in the test cell of Comparative Example 3-1 which included the positive electrode obtained by coating the copper foil collector with the thin PAn film, oxidation of copper occurred also on the collector when the thin PAn film oxidized, so no satisfactory secondary battery characteristics could be obtained. This is so because the surface of the copper collector dissolved.

The test cell of Example 10-2 which included the positive electrode obtained by coating the collector having the carbonaceous material film formed on it with the thin PMAS film has a theoretical capacity and energy density smaller than those of the test cell of Example 10-1 which included the positive electrode coated with the thin PAn film, and had charge/discharge characteristics slightly inferior to those of the test cell of Comparative Example 3-1 which included the positive electrode obtained by coating the copper foil collector with the thin PAn film. However, similar to the characteristics of the positive electrode coated with the thin PAn film, the stable charge/discharge cycles were obtained from this test cell of Example 10-2.

(Example 11)

Polyaniline manufactured by NITTO DENKO CORP. and DMcT manufactured by Tokyo Kasei were dissolved in an N-methylpyrrolidone solvent. Furthermore, a sulfur powder was added, and the resulting mixture was stirred to prepare an ink solution. Note that this ink solution had a composition in which the weight ratio of polyaniline : DMcT was 1 : 30 and the amount of sulfur was varied within a predetermined range.

The resulting ink solution was cast by using an applicator at a thickness of 60 $\mu$m on the collector obtained in Example 2, and dried in a vacuum at 80°C for 3 hrs, thereby manufacturing a positive electrode.

By using the obtained positive electrode, a test cell shown in FIG. 11 was assembled in the same manner as in Example 9. This test cell was subjected to a charge/discharge test under the following conditions.

[Charge/Discharge Test]

Charging was performed at a fixed current density until the cell voltage reached to 4.25 V. After that, the voltage was held at 4.25 V until the charging was completed. After the charging was thus completed, the circuit was opened for 30 min in order to estimate the magnitude of the overvoltage. Discharging was performed with a constant current and terminated when the cell voltage lowered to 1.2 V. The circuit was opened for 30 min after performing the discharge. The details were as follows. The charging current density was 0.25 mA/cm$^2$ in all cycles, and the 31st to 36th cycles were used as evaluation ones. The upper-limit cutoff voltage was 4.25 V. After the cell voltage reached 4.25 V, charging was continued at this fixed potential of 4.25 V until completion. The charging time was 6 hr. As discharge, the 31st and 32nd cycles were performed at a current density of 0.12 mA/cm$^2$, the 33rd and 34th cycles were performed at a current density of 0.25 mA/cm$^2$, and the 35th and 36th cycles were performed at a current density of 0.50 mA/cm$^2$. The lower-limit cutoff voltage was set at 1.0 V, and the discharge was completed when the cell voltage lowered to 1.0 V. This charge/discharge test was conducted in a glove box entirely replaced with argon. By this charge/discharge test, FIG. 15 showing the terminal voltage during discharge in the 31st to 36th cycles was obtained.

As shown in FIG. 15, the test cell of Example 11 hardly changed the discharge voltage and discharge capacity even when the current density was changed in the 31st to 36th cycles, i.e., a discharge capacity close to 400 mAh/g was obtained at a discharge voltage of about 3.5 V. Accordingly, the redox reaction of the active material in the positive electrode is presumably satisfactorily fast at a current density of 0.25 mA/cm$^2$ or less. The charge/discharge efficiency was 90% or more.

When a value obtained by subtracting the theoretical capacities of polyaniline and DMcT in the positive electrode from the discharge capacity was calculated entirely as the discharge capacity based on sulfur, the capacitive density of sulfur was about 960 mAh/g. Therefore, the oxidation number of sulfur probably changes between 0 and -1 during the course of charge/discharge.

(Example 12)

A collector coated with a 30- μm thick carbonaceous material film was manufactured following the same procedures as in Example 2 except that a spray gun was used as the coating method. On the surface of this collector, the polymerization process of 5,6-dithia-4,5,6,7-tetrahydro-2H-isoindole (to be abbreviated as MPY-3 hereinafter) disclosed in Japanese Patent Application No. 2000-335993 and the redox behavior of its polymer (poly(MPY-3)) were evaluated by using cyclic voltammetry.

That is, when the potential of the above collector was swept in the positive direction in a solution containing an MPY-3 monomer, an increase in the current value caused by oxidation of the monomer was observed from around -0.1 V (vs. Ag/Ag$^+$). As the potential sweep was repeated, an increase in the redox current value was observed within a potential range of -1.0 to +0.2 V. It was visually observed that the MPU-3 monomer was polymerized by oxidation to form a poly(MPY-3) film on the collector.

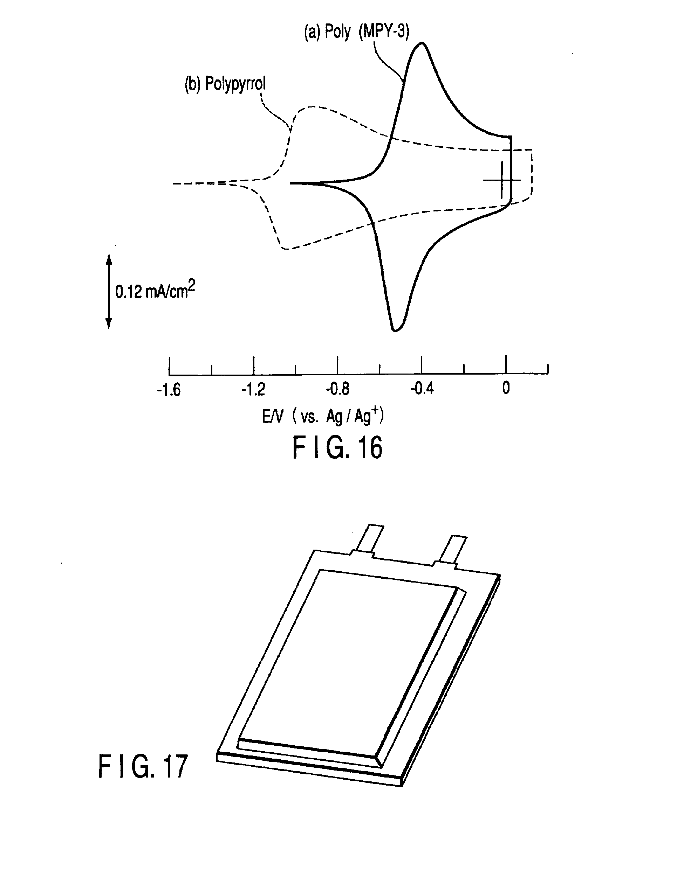

FIG. 16 shows cyclic voltammograms when poly(MPY-3) and polypyrrol polymerized to the same extent as this poly(MPY-3) were electrochemically measured as comparative compounds. A redox reaction was observed in the thin poly(MPY-3) film in a potential region more positive than in the thin polypyrrol film. Also, the energy density of poly(MPY-3) was larger than that of polypyrrol.

From these results, poly(MPY-3) has superior characteristics as a positive electrode material of a polymer secondary battery, and, when combined with the collector coated with the carbonaceous material film described above, can realize a positive electrode capable of increasing the electrical energy extractable per weight.

(Example 13)

On the surface of the collector coated with the carbonaceous material film obtained in Example 2, a 10 to 300 nm thick copper film was formed using a sputtering apparatus (SPF-210H (trade name) manufactured by ANELVA CORPORATION). Subsequently, this thin copper film on the collector was coated with an ink solution containing (DMcT), polyaniline, carbon black, and NMP at a weight ratio of 2 : 1 : 0.2 : 30 by using a bar coater. The ink layer was dried at 100°C to form a 30 to 150 μm thick positive electrode material layer, thereby manufacturing a positive electrode.

The obtained positive electrode was used to assemble a battery having a size of 2 cm × 2 cm shown in FIG. 14 described previously, following the same procedures as in Example 10. After the elapse of one hour, a clip was removed, and, as shown in FIG. 17, the battery was wrapped in an aluminum laminated film, and the opening was melted to assemble a thin lithium secondary battery having an outer package structure. These series of operations were performed in an argon ambient containing water and having a dew point of -90°C or less and an oxygen concentration of 1 ppm or less, in a glove box entirely replaced with argon.

[Charge/Discharge Test]

In the atmosphere, the obtained thin lithium secondary battery was subjected to a charge/discharge test at a charge/discharge rate of 0.2 C and a charge/discharge depth of 80% by using a charge/discharge test apparatus (manufactured by IWATSU ELECTRIC CO., LTD.).

As a consequence, this secondary battery had superior charge/discharge characteristics equivalent to a secondary battery using a collector made of copper.

(Example 14)

On the surface of the collector coated with the carbonaceous material film obtained Example 2, a 10 nm thick gold film was formed using a sputtering apparatus (SPF-210H (trade name) manufactured by ANELVA CORPORATION). This collector was dipped in an aqueous solution containing DMcT for 1 hr to bond DMcT molecules to the surface of the thin gold film. Subsequently, the resultant collector was repetitively alternately dipped in an aqueous solution containing cuprous chloride and aqueous DMcT solution to form molecular stacked films of DMcT and copper, thereby manufacturing a positive electrode.

The obtained positive electrode of Example 14 was used to manufacture an evaluation electrode, assemble a three-electrode type electrolysis cell, and evaluate the characteristics, following the same procedures as in Example 9. Consequently, CV curves possessed similar shape and characteristics to FIG. 9 explained earlier were obtained.

Accordingly, the present invention can provide a positive electrode for lithium secondary battery, which achieves high energy density, by making it possible to use a conductive material, such as aluminum, which is several times as light in weight as copper, as a collector which carries a positive electrode material layer containing an organic sulfide compound as an active material.

Also, the present invention can provide a high-capacity, high-performance lithium secondary battery having the positive electrode described above.

**Claims**

1.    A positive electrode for lithium secondary battery comprising:

a collector obtained by forming a carbonaceous material film on the surface of a conductive substrate; and
a positive electrode material layer carried on the carbonaceous material film side of said collector and containing an organic sulfide compound as a main active material.

2.    A positive electrode for lithium secondary battery according to claim 1, wherein said main active material further contains a $\pi$ electron conjugate conductive polymer.

3.    A positive electrode for lithium secondary battery according to claim 1, wherein said main active material further contains a $\pi$ electron conjugate conductive polymer and inorganic sulfur compound.

4.    A positive electrode for lithium secondary battery according to claim 1, wherein said conductive substrate is made of a material selected from the group consisting of aluminum, titanium, nickel, and alloys of these metals, each of which has a density less than copper.

5.    A positive electrode for lithium secondary battery according to claim 1, wherein said carbonaceous material film contains at least one type of carbonaceous material selected from the group consisting of graphite materials such as natural graphite and artificial graphite, coke, carbon fibers, mesophase carbon microbeads, a graphitization retardant material as a carbide of synthetic resin, and a carbon nanotube, and a binder having resistance to an organic solvent.

6.    A positive electrode for lithium secondary battery according to claim 5, wherein said binder is a polymer or polymerization precursor consisting primarily of amidoimide or imide.

**7.** A positive electrode for lithium secondary battery according to claim 5 or 6, wherein said carbonaceous material film has a form which contains carbonaceous material particles having an average particle size of 20 nm to 30 μm, and in which fine carbonaceous material particles having a particle size of 0.02 to less than 1.0 μm and coarse carbonaceous material particles having a particle size of 1 to 30 μm are mixed at a weight ratio of 85 : 15 to 15 : 85.

**8.** A positive electrode for lithium secondary battery according to claim 1, wherein said conductive substrate is made of aluminum, and said carbonaceous material film formed on said conductive substrate has a thickness of 0.1 to 20 μm.

**9.** A positive electrode for lithium secondary battery according to claim 5, wherein said carbonaceous material film is formed by coating the surface of said conductive substrate with a slurry which contains a carbonaceous material, a binder having resistance to an organic solvent, and an organic solvent by using any of reverse coating, gravure coating, roll knife coating, comma coating, bar coating,-and spray coating, and drying the coating film.

**10.** A positive electrode for lithium secondary battery according to claim 1, wherein fine particles and/or ultrafine particles of a conductive material are adhered to the surface of said carbonaceous material film.

**11.** A lithium secondary battery comprising:

a positive electrode having a collector formed by forming a carbonaceous material film on the surface of a conductive substrate, and a positive electrode material layer carried on the carbonaceous material film side of said collector and containing an organic sulfide compound as a main active material;
an electrolyte; and
a negative electrode having a material which absorbs and releases lithium.

**12.** A lithium secondary battery according to claim 11, wherein said main active material further contains a π electron conjugate conductive polymer.

**13.** A lithium secondary battery according to claim 11, wherein said main active material further contains a π electron conjugate conductive polymer and inorganic sulfur compound.

10 μm

FIG. 1

FIG. 2

FIG. 3

FIG. 4

FIG. 5

FIG. 6

FIG. 7

FIG. 8

FIG. 9

F I G. 10

F I G. 11

FIG. 12

FIG. 13

F I G. 14

F I G. 15

(a) Poly (MPY-3)

(b) Polypyrrol

0.12 mA/cm$^2$

-1.6    -1.2    -0.8    -0.4    0

E/V ( vs. Ag / Ag$^+$)

F I G. 16

F I G. 17

## INTERNATIONAL SEARCH REPORT

| International application No. |
|---|
| PCT/JP02/04925 |

| A. CLASSIFICATION OF SUBJECT MATTER |
|---|
| Int.Cl$^7$  H01M4/02, H01M4/60, H01M4/62, H01M4/66, H01M10/40 |

According to International Patent Classification (IPC) or to both national classification and IPC

| B. FIELDS SEARCHED |
|---|

Minimum documentation searched (classification system followed by classification symbols)
Int.Cl$^7$  H01M4/02, H01M4/60, H01M4/62, H01M4/66, H01M10/40

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br><br>A | JP 8-109196 A  (Matsushita Electric Industrial<br>Co., Ltd.),<br>30 April, 1996 (30.04.96),<br>Claims; Par. Nos. [0010], [0012] to [0022]<br>(Family: none) | 1,2,4,5,11,<br>12<br>3,6-10,13 |
| X<br>Y | WO 99/33131 A1  (Moltech Corp.),<br>01 July, 1999 (01.07.99),<br>Page 26, lines 4 to 11; Claims<br>& JP 2001-527276 A     & EP 1042833 A | 1,4,8,11<br>2,12 |
| X<br>Y | WO 99/33127 A1  (Moltech Corp.),<br>01 July, 1999 (01.07.99),<br>Page 21, lines 7 to 15; Claims<br>& JP 2001-527275 A     & EP 1042830 A | 1,4,8,11<br>2,12 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 August, 2002 (15.08.02) | 03 September, 2002 (03.09.02) |

| Name and mailing address of the ISA/<br>Japanese Patent Office | Authorized officer |
|---|---|
| Facsimile No. | Telephone No. |

Form PCT/ISA/210 (second sheet) (July 1998)

**EP 1 391 948 A1**

## INTERNATIONAL SEARCH REPORT

International application No.

PCT/JP02/04925

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2001-273901 A (Yuasa Corp.), 05 October, 2001 (05.10.01), Claims; Par. Nos. [0034], [0042] to [0049] (Family: none) | 1,4 |
| P,X | JP 2002-110237 A (Samsung SDI Kabushiki Kaisha), 12 April, 2002 (12.04.02), Claims 1, 9, 14; Par. Nos. [0028], [0034] to [0038] (Family: none) | 1-5,9, 11-13 |

Form PCT/ISA/210 (continuation of second sheet) (July 1998)

## INTERNATIONAL SEARCH REPORT

| International application No. |
|---|
| PCT/JP02/04925 |

**Box I   Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

(See extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☐ No protest accompanied the payment of additional search fees.

Form PCT/ISA/210 (continuation of first sheet (1)) (July 1998)

**INTERNATIONAL SEARCH REPORT**

International application No.

PCT/JP02/04925

<u>Continuation of Box No.II of continuation of first sheet(1)</u>

For a group of inventions to fulfill the requirement of unity of invention, there must exist "special technical features" for linking the group of inventions so as to form a single general inventive concept.

"An anode for a lithium secondary battery, comprising a collector formed by a carbon material film on the surface of a conductive substrate, and an anode material layer carried on the carbon material film side of this collector and including an organic sulfide compound as a main material" as described in claim 1 is described in a prior art document, JP 8-109196 A (Matsushita Electric Industrial Co., Ltd.) 1996. 04. 30., WO 99/33131 A1 (MOLTHECH CORPORATION) 1999. 07. 01, WO 99/33127 A1 (MOLTECH CORPORATION ) 1999. 07. 01, and therefore it cannot constitute "special technical features".

"An anode for a lithium secondary battery in claim 1, wherein the main active material further includes $\pi$ electron conjugation conductive polymer" as described in claim 2 is also described in a prior art document, JP 8-109196 A (Matsushita Electric Industrial Co., Ltd.), and therefore it cannot constitute "special technical features".

"An anode for a lithium secondary battery in claim 1, wherein the carbon material film has at least one kind of carbon material selected from natural graphite, ..., and a binder resistant to an organic solvent" as described in claim 5 is also described in a prior art document, JP 8-109196 A (Matsushita Electric Industrial Co., Ltd.), and therefore it cannot constitute "special     Therefore, there exists among a group of inventions in claims 1-13 no special technical features for linking the group of inventions so as to form a single general inventive concept. Accordingly, it is clear that the group of inventions in claims 1-13 do not fulfill the requirement of unity of invention.

Next, the number of inventions described in the claims of this international application will be studied; in the claims of this international application 13 inventions are described classified as claims 1, 2, 3, 4, 5, 6, claim 7 that quote claim 5, claims 8, 9, 10, 11, 12, 13.

Although claims 1 and 11, 2 and 12 share technical feature described in claim 1 or 2, these technical features are as stated earlier not "special technical features and it is evident that claims 1 and 11 and 2 and 12 do not have "special technical features".

Accordingly, in the claims of this international application 13 inventions are described classified as claims 1, 2, 3, 4, 5, 6, claim 7 that quote claim 5, claims 8, 9, 10, 11, 12, 13.

Form PCT/ISA/210 (extra sheet) (July 1998)